# EUROPEAN PATENT SPECIFICATION

(11) **EP 4 559 299 B1**
(45) Date of publication and mention of the grant of the patent: **14.10.2026**
(21) Application number: 24215897.0
(22) Date of filing: 27.11.2024
(51) Int. Cl.: A01B 79/00, A01M 7/00, B05B 1/20, B05B 12/12

(54) **IMPLEMENT CONTROL FOR AGRICULTURAL VEHICLES**
GERÄTESTEUERUNG FÜR LANDWIRTSCHAFTLICHE FAHRZEUGE
COMMANDE D'OUTIL POUR VÉHICULES AGRICOLES

(30) Priority: 27.11.2023 IT 202300025167
(43) Date of publication of application: 28.05.2025
(73) Proprietor: CNH Industrial Italia S.p.A., 10156 Torino (IT)
(72) Inventor: Ferrari, Luca, 10156 Turin (IT); Lisurici, Fabio, 10156 Turin (IT); Rizzi, Andrea, 10156 Turin (IT)
(74) Representative: CNH Industrial IP Department

(56) References cited:
- CA-A1- 3 042 593
- CN-U- 212 279 614
- US-B2- 10 151 839
- PENG CHEN ET AL: "GNSS-Free End-of-Row Detection and Headland Maneuvering for Orchard Navigation Using a Depth Camera", MACHINES, vol. 11, no. 1, 9 January 2023 (2023-01-09), pages 84, XP093104108, DOI: 10.3390/machines11010084

## Description

### TECHNICAL FIELD

The present invention relates to a method of controlling an implement of an agricultural vehicle driving over a path along a crop row. The present invention further relates to a system configured to carry out such a control method, and an agricultural vehicle comprising such a system.

### BACKGROUND

In recent years, big improvements in the accuracy of driver assistance systems have made it easier for operators of drive through the fields and make efficient use of the implements they may be pulling or pushing through these field. Partly or fully autonomous driving systems allow the driver to pay more attention to the operation of the implement. In some agricultural vehicles, visual camera systems are installed and image recognition algorithms are used for selective spraying of crops. In some newer systems, neural networks and AI processing of images may be used to classify, locate, and bound objects of interest. Other systems may use LIDAR for detecting the presence and location of trees and plants. This information may be combined with GPS information to selectively spray regions that need spraying. CA 3 042 593 A1 discloses a system and a method of controlling an implement using a LIDAR sensor generating a point cloud.

It is an aim of the present invention to further improve on the systems already disclosed in the prior art.

### SUMMARY OF THE INVENTION

According to an aspect of the invention there is provided a method of controlling an implement of an agricultural vehicle driving over a path along a crop row. The method comprises a step of using a point cloud sensor to scan a portion of the crop row and to generate a point cloud. A plurality of crop row volumes is defined. The crop row volumes are arranged along the scanned portion of the crop row. For each of the crop row volumes, a vertical point density distribution is determined by calculating which points of the point cloud fall within said crop row volume. The implement is then controlled based on the vertical point density distribution of each of the crop row volumes.

While LIDAR may have been used before to detect the presence or absence of plants and trees, the current invention takes the use of point cloud data for implement control to another level. By determining the vertical point density in each crop row volume it is made possible to control the implement in a way that optimises the efficient use of, for example, vehicle power and spraying liquid. Instead of a one-size-fits-all approach, the now proposed control method allows for adapting the implement use to the local crop growth. For example, more spraying liquid may be used where the vegetation is more dense and more spraying liquid may be needed. In orchards, tree tops may be treated according to the local density of their foliage, without wasting energy or spraying liquid on less dense parts of the vegetation. When tilling cover crops, energy may be saved by tilling less aggressively where the crop is lower and less dense.

In some embodiments, the LIDAR-based system may supplement a GPS-based implement control system for enhanced accuracy. The GPS-based system may, for example, make use of detailed georeferenced field maps that may have been provided by satellite imaging systems, drone observations, or previous passes of agricultural vehicles through the field. Alternatively, the LIDAR-based system is provided as a backup system for when the GPS-based implement control system fails, for example because of unreliable GPS signals.

In a particular implementation, each of the crop row volumes comprises two or more crop row sub-volumes, each crop row sub-volume of the crop row volume being arranged at a different height above ground, and wherein the vertical point density distribution of the crop row volume is determined by calculating which points of the point cloud fall within each one of the crop row sub-volumes. The smaller the sub-volumes, the more precise the vertical point density distribution may be, and the more efficient the implement operation can be made.

The method of controlling an implement may further comprise determining a point cloud envelope of the point cloud and controlling the implement based on the point cloud envelope. The point cloud envelope may be calculated using edge detection algorithms to determine the boundaries of the point clouds generated by the point cloud sensor. Alternatively, the point cloud envelope is determined based on the vertical point density distribution of each of the crop row volumes.

Typically, the scanned portion of the crop row is at least partly located ahead of the implement during the scanning of said portion. The scanned portion of the crop row may be located ahead of the agricultural vehicle while the implement is located behind the agricultural vehicle.

Typically, GPS sensors and algorithms based on GPS data are used to accurately control the timing of the use of the implement. Unfortunately, in some locations, such as inside greenhouses or in orchards with dense foliage and canopy, GPS signals may be weak and GPS-based positioning systems may not have the desired accuracy. To solve this problem, preferred embodiments of the method according to the invention further comprise a step of determining a travel speed of the agricultural vehicle and the controlling of the implement is further based on the travel speed of the agricultural vehicle. By taking into account the vehicle's travel speed, which can be done without the use of GPS, the implement's exact position relative to the observed point cloud can be determined and the timing of the use of the implement can be optimised. Travel speeds of the agricultural vehicle may, for example, be measured using odometry in the form of rotary encoders, accelerometers or camera image based motion analysis.

In preferred embodiments, the plurality of crop row volumes may comprise a closer row of crop volumes, arranged along the scanned portion of the crop row at a first distance to the path, and a further row of crop volumes, arranged along the scanned portion of the crop row at a second distance to the path, the second distance being larger than the first distance. By also scanning the crop rows in this horizontal direction perpendicular to the travel path of the agricultural vehicle, and in addition to the calculation of a vertical point density distribution, a full 3D picture of the varying point density in the crop row can be obtained and the operation of the implement can be adapted accordingly.

Optionally, a method according to the invention further includes a step of, based on the vertical point density distribution of the crop row volumes, detecting an end of the crop row, and a step of initiating a headland turn sequence comprising controlling the implement to prepare for an upcoming headland turn. This way, the point cloud sensor can be used, not just for improved implement control, but also for end of row detection. This method for end of row detection brings the advantage that it remains available in the absence of an accurate GPS signal. To further improve the end of row detection, the control system may look for crop row volumes with no or very few points of the generated point cloud at either side of the agricultural vehicle.

In a particular advantageous implementation, the implement of the agricultural vehicle is a sprayer with a plurality of spraying nozzles, and controlling the implement comprises selectively opening and closing a subset of the plurality of spraying nozzles. With such a selectively controllable sprayer, it is possible to only spray the parts of crops that need to be sprayed. It may further be possible to selectively spray specific amounts of spraying liquid in dependence of the local point density at the respective height, such that more spraying liquid is applied to the most dense parts of the crop.

The method according to the invention may further comprise the use of the point cloud sensor to scan a portion of a second crop row along another side of the path. In this case, a plurality of second crop row volumes is defined, the second crop row volumes also being arranged along the scanned portion of the second crop row. For each of the second crop row volumes, a vertical point density distribution is determined by calculating which points of the point cloud fall within said crop row volume ,and the implement is controlled based on the vertical point density distribution of each of the second crop row volumes. As already described above, point could data from both sides of the path may be combined to determine when the agricultural vehicle and the implement reach the end of a crop row.

According to another aspect of the invention, a non-transitory, computer-readable storage medium is provided, storing instructions thereon that when executed by one or more processors cause the one or more processors to execute a method as described above.

According to yet another aspect of the invention, a system is provided for controlling an implement of an agricultural vehicle driving over a path along a crop row. The system comprises a point cloud sensor configured to scan a portion of the crop row and to generate a point cloud. The point cloud sensor may, for example, be a LIDAR sensor, a stereo-camera, or a radar (e.g. Imaging or 4D radar). A controller of the system is operatively coupled to the point cloud sensor to receive the generated point cloud therefrom. The controller is configured to use the system to perform a method as described above.

Preferably, the system further comprises a speed sensor for determining a travel speed of the agricultural vehicle. The speed sensor is operatively coupled to the controller, which is further configured to generate the control commands based on the vertical point density distribution of each of the crop row volumes and the travel speed of the agricultural vehicle. As described above, this allows the system to operate with the desired accuracy, even in situations where no reliable GPS information may be available.

According to another aspect of the invention, an agricultural vehicle is provided. The agricultural vehicle is configured to carry and control an implement, and it comprises a control system as described above.

### BRIEF DESCRIPTION OF THE DRAWINGS

Embodiments of the invention will now be described by way of example with reference to the accompanying drawings, in which:
- Figure 1 shows a tractor that may make use of the current invention.
- Figure 2 schematically shows the tractor of Figure 1, towing an implement and driving between two crop rows.
- Figure 3 schematically shows a collection of crop row volumes as defined in accordance with an embodiment of the invention.

### DETAILED DESCRIPTION

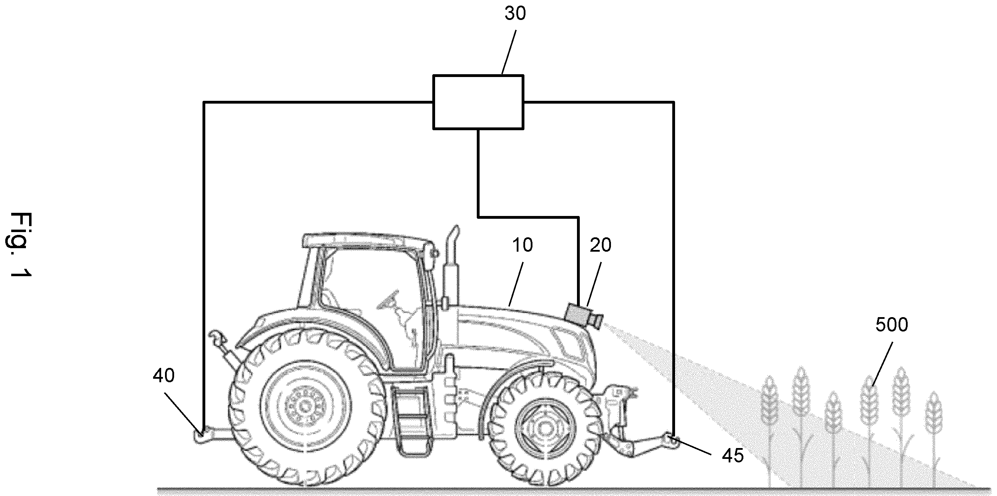

Figure 1 shows an agricultural vehicle in the form of a tractor 10 that may make use of the current invention. A point cloud sensor 20 is installed on the hood of the tractor 10 to scan a portion of the crop 500 the tractor 10 drives by during use. The point cloud sensor 20 may, for example, be a LIDAR sensor, a digital camera, a stereo camera, etc. The point cloud sensor 20 is configured to generate a point cloud. Point clouds comprise a plurality of points with a defined position in space and thereby represent the 3D shape of an object or part of an object. The point cloud data is generally obtained by determining a distance and direction between the point cloud sensor 20 and a plurality of points on the surface of the object. The point cloud sensor 20 in this example is installed at the hood of the tractor 10 and has a field of view that is positioned in front of the tractor 10 in the direction of travel. The point cloud sensor 20 of Figure 1 may be supplemented with, or replaced by, other point cloud sensors 20 looking more to the side and/or rear of the tractor 10. Other suitable locations for installing the point cloud sensor 20 may, for example, include positions on or at the roof of the driver cabin or at the mount of the side mirrors. A rotatable or otherwise movable point cloud sensor 20 may be used to obtain a full 360° view of the direct environment of the tractor 10.

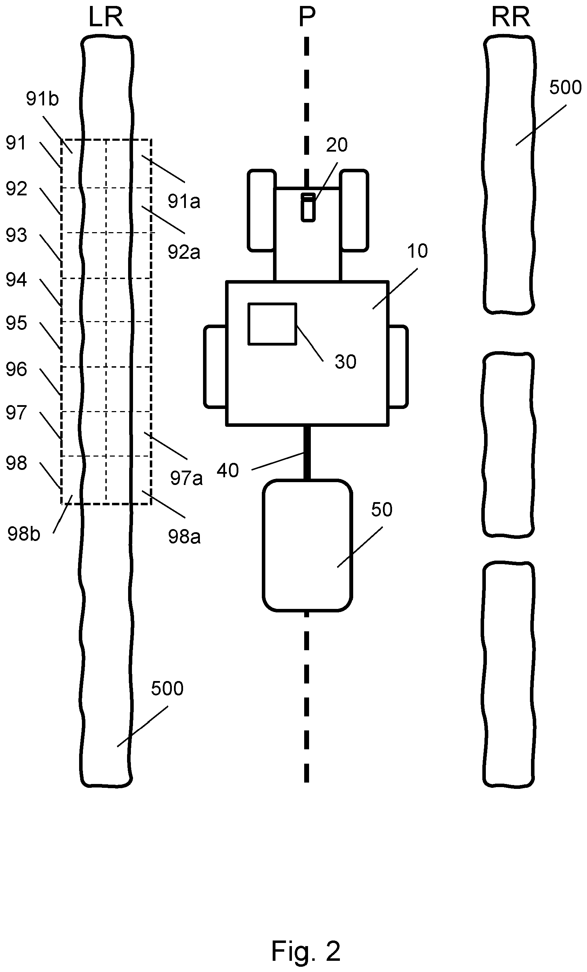

The tractor 10 comprises a towbar, for example in the form of a three-point hitch 40, for towing an implement 50 (see Figure 2). The implement 50 may be powered by the tractor engine via a PTO. In other embodiments, an implement may be carried at the tractor's front hitch 45. The point cloud sensor 20 is coupled to a controller 30 of the tractor 10 via a wired or wireless connection to receive the obtained point cloud data therefrom. Similarly, the controller 30 configured to be coupled to the implement 50, for example via a wired connection through the hitch 40, 45, or via a wireless connection. According to various embodiments of the method according the invention, the controller 30 uses the received point cloud data to efficiently control the implement 50. Some essential and optional aspects of such methods are described below with reference to Figure 2.

Figure 2 schematically shows the tractor 10 of Figure 1, towing an implement 50 and driving over a path P between a left crop row LR and a right crop row RR. The path P may be chosen and followed by a driver steering the tractor 10 or an autonomous driving system may control the tractor 10 to follow this path P. Alternatively, the driver may steer the tractor 10 while being guided and/or assisted by a driver assistance system. The autonomous driving system or driver assistance system may, for example, use a GPS sensor to monitor the position of the tractor and adapt its course accordingly. Alternatively or additionally, the point cloud data may be used to for determining a distance between the tractor and the two crop rows LR, RR, while controlling the tractor 10 to keep both crop rows LR, RR at substantially the same distance.

According to an embodiment of the invention, the point cloud sensor 20 is used to scan a portion of one or both crop rows LR, RR and to generate a point cloud representing the outer surface of the vegetation 500 in the respective crop row LR, RR. Depending on the crop type, the rows will contain some crop along substantially the full length of the crop row LR, RR, or gaps in between separate plants, trees, or bushes may contain no vegetation at all. The generated point cloud data is received by the controller 30. The controller defines a plurality of crop row volumes 91-98 that are arranged along the scanned portion of the crop row LR, RR. For each of the crop row volumes 91-98, a vertical point density distribution is determined by calculating which points of the generated point cloud fall within said crop row volume. The implement 50 is then controlled based on the vertical point density distribution of each of the crop row volumes 91-98.

Various methods are available for determining the vertical point density distribution of the crop row volumes 91-98. For example, each point in the generated point cloud may comprise a height parameter, indicating a vertical height of the point above a reference level (e.g. the ground level, or a height of the point cloud sensor 20). Based on the height parameters of all the points inside a crop row volume 91-98, a vertical point distribution can be computed using well-known mathematical algorithms. In a particular implementation, each of the crop row volumes 91-98 comprises two or more crop row sub-volumes. Each crop row sub-volume of the crop row volume 91-98 is arranged at a different height above ground. The vertical point density distribution of the crop row volume 91-98 is then determined by calculating which points of the point cloud fall within each one of the crop row sub-volumes. The smaller the sub-volumes, the more precise the vertical point density distribution will be, and the more efficient the implement operation can be made.

While LIDAR may have been used before to detect the presence or absence of plants and trees, the current invention takes the use of point cloud data for implement control to another level. By determining the vertical point density in each crop row volume it is made possible to control the implement 50 in a way that optimises the efficient use of, for example, vehicle power and spraying liquid. Instead of a one-size-fits-all approach, the now proposed control method allows for adapting the implement use to the local crop growth. For example, more spraying liquid may be used where the vegetation 500 is more dense and more spraying liquid may be needed. In orchards, tree tops may be treated according to the local density of their foliage, without wasting energy or spraying liquid on less dense parts of the vegetation 500. When tilling cover crops, energy may be saved by tilling less aggressively where the crop is lower and less dense.

The controller 30 may further be used for determining a point cloud envelope of the point cloud and for controlling the implement 50 based on the point cloud envelope. A point cloud envelope may be calculated using edge detection algorithms to determine the boundaries of the point clouds generated by the point cloud sensor 20. Alternatively, the point cloud envelope is determined based on the vertical point density distribution of each of the crop row volumes 91-98.

Typically, the scanned portion of the crop row LR, RR is at least partly located ahead of the implement 55 during the scanning of said portion. For example, in the embodiment of Figures 1 and 2, the scanned portion of the crop row LR, MR is located ahead of the tractor 10 while the implement 50 is located behind the tractor 50. Consequently, the implement control should normally not directly follow the point cloud data gathering. Typically, GPS sensors and algorithms based on GPS data are used to accurately control the timing of the use of the implement 50. Unfortunately, in some locations, such as inside greenhouses or in orchards with dense foliage, GPS signals may be weak and GPS-based positioning systems may not have the desired accuracy. To solve this problem, in preferred embodiments of the invention the controller 30 is further configured to determine a travel speed of the tractor 10 and the implement control is further based on the thus determined travel speed. By taking into account the vehicle's travel speed, the implement's exact position relative to the observed point cloud can be determined and the timing of the use of the implement 50 can be optimised. Travel speeds of the tractor 10, and the distance travelled since scanning a particular portion of the crop row LR, RR, may be measured using GPS. It may, however, be preferred to determine the travel speed in such a way that it remains accurate when no reliable GPS signal is available. For example, odometry in the form of rotary encoders, accelerometers or camera image based motion analysis may be used for accurate GPS-independent travel speed measurement. In some embodiments, the odometry system may supplement the GPS-based system for increased accuracy. In other embodiments, the odometry system is only activated when it is detected that the GPS signal is not sufficiently reliable.

In preferred embodiments, the plurality of crop row volumes 91-98 may comprise a closer row of crop volumes 91a-98a, arranged along the scanned portion of the crop row LR, RR at a first distance to the path P, and a further row of crop volumes 91b-98b, arranged along the scanned portion of the crop row LR, RR at a second distance to the path P. The second distance is larger than the first distance. For not obscuring Figure 2 with too many labels, only some of the closer row of crop row volumes 91a-98a and further row of crop volumes 91b-98b have been labelled. By not just scanning the crop rows LR, RR in the vertical direction and in the direction of travel, but also in the horizontal direction perpendicular to the travel path P, a full 3D picture of the varying point density in all directions can be obtained and the operation of the implement can 50 be adapted accordingly.

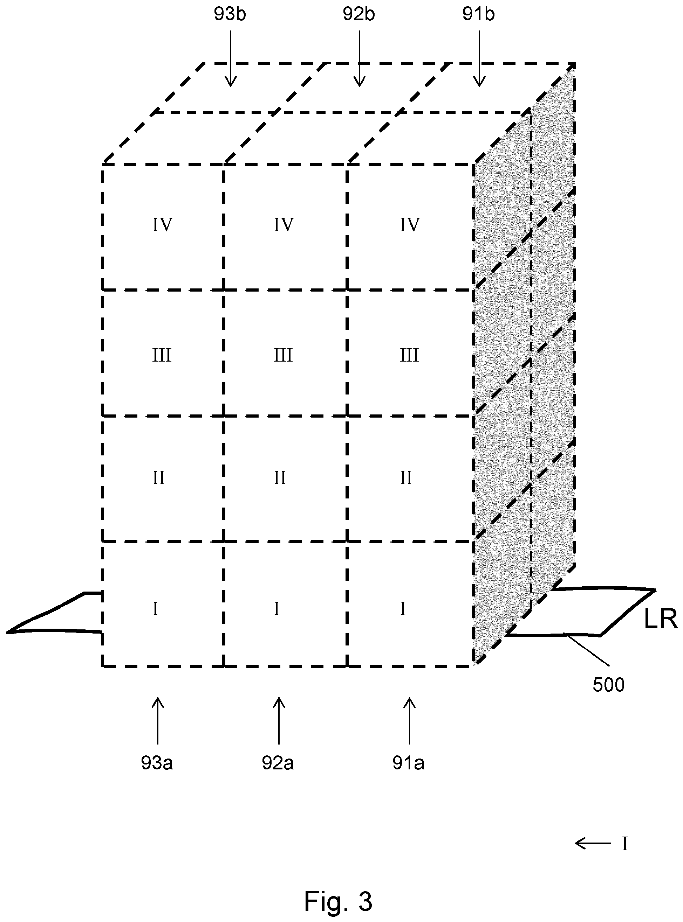

Figure 3 schematically shows a collection of crop row volumes 91, 92, 93 as defined in accordance with an embodiment of the invention. The crop row volumes 91, 92, 93 cover respective portions of the left crop row LR shown in Figure 2. Each crop row volume comprises a closer row of crop volumes 91a, 92a, 93a that is positioned closer to the path P than a further row of crop volumes 91b, 92b, 93b. Each closer and further crop row volume 91a, 92a, 93a, 91b, 92b, 93b is divided into four crop row sub-volumes I, II, III, IV. Each crop row sub-volume I, II, III, IV is arranged at a different height above ground. The vertical point density distribution of the crop row volumes 91a-93b is determined by calculating which points of the point cloud fall within each one of the crop row sub-volumes I, II, III, IV.

The calculated vertical point density distribution of the crop row volumes 91-98 may be used by the controller 30 to detect an end of the crop row LR, RR. The end of a crop row may, for example, be detected when the average or maximum point density of a crop row volume 91-98 remains below a minimum threshold for a set amount of adjacent crop row volumes 91-98. Preferably, crop rows LR, RR at both sides of the tractor are monitored and a row end is only detected when no crop 500 is found at either side of the tractor 10. When a row end is detected, the controller 30 may initiate a headland turn sequence that comprises controlling the implement 50 to prepare for the upcoming turn of the tractor 10 at the headland. This way, the point cloud sensor 20 can be used, not just for improved implement control, but also for end of row detection. This method for end of row detection brings the advantage that it remains available in the absence of an accurate GPS signal.

In a particular advantageous implementation, the implement 50 of the tractor 10 is a sprayer with a plurality of spraying nozzles. The controller 30 may be configured to control the sprayer by selectively opening and closing a subset of the plurality of spraying nozzles. With such a selectively controllable sprayer, it is possible to only spray the parts of crops 500 that need to be sprayed and not waste any spraying liquid that just evaporates in the air or falls to the ground. It may further be possible to selectively spray specific amounts of spraying liquid in dependence of the local point density at the respective height, such that more spraying liquid is applied to the most dense parts of the crop. In other embodiments, the implement 50 may, for example, be a duster with multiple nozzles that can be controlled individually. Similarly, the calculated vertical point density distribution may be used to selectively control a trimmer or defoliator to operate on specific parts of trees, plants, or bushes.

## Claims

1. A method of controlling an implement (50) of an agricultural vehicle (10) driving over a path (P) along a crop row (LR, RR), the method comprising:
using a point cloud sensor (20) to scan a portion of the crop row (LR, RR) and to generate a point cloud;
defining a plurality of crop row volumes (91-98), arranged along the scanned portion of the crop row (LR, RR);
for each of the crop row volumes (91-98), determining a vertical point density distribution by calculating which points of the point cloud fall within said crop row volume (91-98); and
controlling the implement (50) based on the vertical point density distribution of each of the crop row volumes (91-98).

2. A method of controlling an implement (50) as claimed in claim 1, wherein each of the crop row volumes (91-98) comprises two or more crop row sub-volumes (I, II, III, IV), each crop row sub-volume (I, II, III, IV) of the crop row volume (91-98) being arranged at a different height above ground, and wherein the vertical point density distribution of the crop row volume (91-98) is determined by calculating which points of the point cloud fall within each one of the crop row sub-volumes (I, II, III, IV).

3. A method of controlling an implement (50) as claimed in claim 1 or 2, the method further comprising determining a point cloud envelope of the point cloud and controlling the implement (50) based on the point cloud envelope.

4. A method of controlling an implement (50) as claimed in claim 3, wherein the point cloud envelope is determined based on the vertical point density distribution of each of the crop row volumes (91-98).

5. A method of controlling an implement (50) as claimed in any preceding claim, wherein the scanned portion of the crop row (LR, RR) is at least partly located ahead of the implement (50) during the scanning of said portion, and optionally wherein the implement (50) is located behind the agricultural vehicle (10).

6. A method of controlling an implement (50) as claimed in any preceding claim, further comprising determining a travel speed of the agricultural vehicle (10) and wherein the controlling the implement (50) is further based on the travel speed of the agricultural vehicle (10).

7. A method of controlling an implement (50) as claimed in any preceding claim, wherein the plurality of crop row volumes (91-98) comprises a closer row of crop volumes (91a-98a), arranged along the scanned portion of the crop row (LR, RR) at a first distance to the path (P), and a further row of crop volumes (91b-98b), arranged along the scanned portion of the crop row (LR, RR) at a second distance to the path (P), the second distance being larger than the first distance.

8. A method of controlling an implement (50) as claimed in any preceding claim, further comprising:
based on the vertical point density distribution of the crop row volumes (91-98), detecting an end of the crop row (LR, RR); and
initiating a headland turn sequence comprising controlling the implement (50) to prepare for an upcoming headland turn.

9. A method of controlling an implement (50) as claimed in any preceding claims, wherein the implement (50) is a sprayer with a plurality of spraying nozzles, and wherein controlling the implement (50) comprises selectively opening and closing a subset of the plurality of spraying nozzles.

10. A method of controlling an implement (50) as claimed in any preceding claims, further comprising:
using the point cloud sensor (20) to scan a portion of a second crop row (LR, RR) along another side of the path (P),
defining a plurality of second crop row volumes (91-98), arranged along the scanned portion of the second crop row (LR, RR) ;
for each of the second crop row volumes (91-98), determining a vertical point density distribution by calculating which points of the point cloud fall within said crop row volume (91-98); and
controlling the implement (50) based on the vertical point density distribution of each of the second crop row volumes (91-98).

11. A system for controlling an implement of an agricultural vehicle (10) driving over a path (P) along a crop row (LR, RR), the system comprising a point cloud sensor (20) configured to scan a portion of the crop row (LR, RR) and to generate a point cloud and a controller (30), operatively coupled to the point cloud sensor to receive the generated point cloud therefrom, the controller (30) being configured to
define a plurality of crop row volumes (91-98), arranged along the scanned portion of the crop row (LR, RR);
determine a vertical point density distribution for each of the crop row volumes (91-98) by calculating which points of the point cloud fall within said crop row volume (91-98); and
generate control commands for controlling the implement (50) based on the vertical point density distribution of each of the crop row volumes (91-98).

12. A system as claimed in claim 11, wherein the point cloud sensor (20) is a LIDAR sensor.

13. system as claimed in claim 11 or 12, further comprising a speed sensor for determining a travel speed of the agricultural vehicle (10), operatively coupled to the controller (30), and wherein the controller (30) is further configured to generate the control commands based on the vertical point density distribution of each of the crop row volumes (91-98) and the travel speed of the agricultural vehicle (10).

14. An agricultural vehicle (10) configured to carry and control an implement (50), the agricultural vehicle (10) comprising a system as claimed in any of claims 11 to 14.

15. A non-transitory, computer-readable storage medium storing instructions thereon that when executed by one or more processors cause the system of any of claims 11 to 13 to execute the method of any of claims 1 to 10.

## Patentansprüche

1. Verfahren zum Steuern eines Arbeitsgeräts (50) eines landwirtschaftlichen Fahrzeugs (10), das auf einem Pfad (P) entlang einer Erntegutreihe (LR, RR) fährt, wobei das Verfahren umfasst:
Verwenden eines Punktwolkensensors (20), um einen Abschnitt der Erntegutreihe (LR, RR) abzutasten und eine Punktwolke zu erzeugen;
Definieren einer Vielzahl von Erntegutreihenvolumina (91-98), die entlang des abgetasteten Abschnitts der Erntegutreihe (LR, RR) angeordnet sind;
für jedes der Erntegutreihenvolumina (91-98), Bestimmen einer vertikalen Punktdichteverteilung durch Berechnen, welche Punkte der Punktwolke in das Erntegutreihenvolumen (91-98) fallen; und
Steuern des Arbeitsgeräts (50) basierend auf der vertikalen Punktdichteverteilung jedes der Erntegutreihenvolumina (91-98).

2. Verfahren zum Steuern eines Arbeitsgeräts (50) nach Anspruch 1, wobei jedes der Erntegutreihenvolumina (91-98) zwei oder mehr Erntegutreihenteilvolumina (I, II, III, IV) umfasst, wobei jedes Erntegutreihenteilvolumen (I, II, III, IV) des Erntegutreihenvolumens (91-98) in einer anderen Höhe über dem Boden angeordnet ist, und wobei die vertikale Punktdichteverteilung des Erntegutreihenvolumens (91-98) bestimmt wird, indem berechnet wird, welche Punkte der Punktwolke in jedes einzelne der Erntegutreihenteilvolumina (I, II, III, IV) fallen.

3. Verfahren zum Steuern eines Arbeitsgeräts (50) nach Anspruch 1 oder 2, wobei das Verfahren ferner das Bestimmen einer Punktwolkenhülle der Punktwolke und das Steuern des Arbeitsgeräts (50) basierend auf der Punktwolkenhülle umfasst.

4. Verfahren zum Steuern eines Arbeitsgeräts (50) nach Anspruch 3, wobei die Punktwolkenhüllkurve basierend auf der vertikalen Punktdichteverteilung jedes der Erntegutreihenvolumina (91-98) bestimmt wird.

5. Verfahren zum Steuern eines Arbeitsgeräts (50) nach einem der vorhergehenden Ansprüche, wobei sich der abgetastete Abschnitt der Erntegutreihe (LR, RR) während des Abtastens des Abschnitts zumindest teilweise vor dem Arbeitsgerät (50) befindet, und wobei sich optional das Arbeitsgerät (50) hinter dem landwirtschaftlichen Fahrzeug (10) befindet.

6. Verfahren zum Steuern eines Arbeitsgeräts (50) nach einem der vorhergehenden Ansprüche, ferner umfassend das Bestimmen einer Fahrgeschwindigkeit des landwirtschaftlichen Fahrzeugs (10), und wobei das Steuern des Arbeitsgeräts (50) ferner auf der Fahrgeschwindigkeit des landwirtschaftlichen Fahrzeugs (10) basiert.

7. Verfahren zum Steuern eines Arbeitsgeräts (50) nach einem der vorhergehenden Ansprüche, wobei die Vielzahl von Erntegutreihenvolumina (91-98) eine nähere Reihe von Erntegutvolumina (91a-98a), angeordnet entlang des abgetasteten Abschnitts der Erntegutreihe (LR, RR) in einem ersten Abstand zu dem Pfad (P), und eine weitere Reihe von Erntegutvolumina (91b-98b), angeordnet entlang des abgetasteten Abschnitts der Erntegutreihe (LR, RR) in einem zweiten Abstand zu dem Pfad (P), umfasst, wobei der zweite Abstand größer als der erste Abstand ist.

8. Verfahren zum Steuern eines Arbeitsgeräts (50) nach einem der vorhergehenden Ansprüche, ferner umfassend:
basierend auf der vertikalen Punktdichteverteilung der Erntegutreihenvolumina (91-98), Erfassen eines Endes der Erntegutreihe (LR, RR); und
Einleiten einer Vorgewende-Wendesequenz, umfassend das Steuern des Arbeitsgeräts (50) zur Vorbereitung auf eine bevorstehende Vorgewendewendung.

9. Verfahren zum Steuern eines Arbeitsgeräts (50) nach einem der vorhergehenden Ansprüche, wobei das Arbeitsgerät (50) eine Sprühvorrichtung mit einer Vielzahl von Sprühdüsen ist, und wobei das Steuern des Arbeitsgeräts (50) das selektive Öffnen und Schließen einer Teilmenge der Vielzahl von Sprühdüsen umfasst.

10. Verfahren zum Steuern eines Arbeitsgeräts (50) nach einem der vorhergehenden Ansprüche, ferner umfassend:
Verwenden des Punktwolkensensors (20) zum Abtasten eines Abschnitts einer zweiten Erntegutreihe (LR, RR) entlang einer anderen Seite des Pfades (P),
Definieren einer Vielzahl von zweiten Erntegutreihenvolumina (91-98), die entlang des abgetasteten Abschnitts der zweiten Erntegutreihe (LR, RR) angeordnet sind;
für jedes der zweiten Erntegutreihenvolumina (91-98), Bestimmen einer vertikalen Punktdichteverteilung durch Berechnen, welche Punkte der Punktwolke in das Erntegutreihenvolumen (91-98) fallen; und
Steuern des Arbeitsgeräts (50) basierend auf der vertikalen Punktdichteverteilung jedes der zweiten Erntegutreihenvolumina (91-98).

11. System zum Steuern eines Arbeitsgeräts eines landwirtschaftlichen Fahrzeugs (10), das über einen Pfad (P) entlang einer Erntegutreihe (LR, RR) fährt, wobei das System einen Punktwolkensensor (20), der dafür konfiguriert ist, einen Abschnitt der Erntegutreihe (LR, RR) abzutasten und eine Punktwolke zu erzeugen, und eine Steuerung (30) umfasst, die mit dem Punktwolkensensor wirkverbunden ist, um die erzeugte Punktwolke davon zu empfangen, wobei die Steuerung (30) konfiguriert ist zum
Definieren einer Vielzahl von Erntegutreihenvolumina (91-98), die entlang des abgetasteten Abschnitts der Erntegutreihe (LR, RR) angeordnet sind;
Bestimmen einer vertikalen Punktdichteverteilung für jedes der Erntegutreihenvolumina (91-98) durch Berechnen, welche Punkte der Punktwolke in das Erntegutreihenvolumen (91-98) fallen; und
Erzeugen von Steuerbefehlen zum Steuern des Arbeitsgeräts (50) basierend auf der vertikalen Punktdichteverteilung jedes der Erntegutreihenvolumina (91-98).

12. System nach Anspruch 11, wobei der Punktwolkensensor (20) ein LIDAR-Sensor ist.

13. System nach Anspruch 11 oder 12, ferner umfassend einen Geschwindigkeitssensor zum Bestimmen einer Fahrgeschwindigkeit des landwirtschaftlichen Fahrzeugs (10), der mit der Steuerung (30) wirkverbunden ist, und wobei die Steuerung (30) ferner konfiguriert ist, um die Steuerbefehle basierend auf der vertikalen Punktdichteverteilung jedes der Erntegutreihenvolumina (91-98) und der Fahrgeschwindigkeit des landwirtschaftlichen Fahrzeugs (10) zu erzeugen.

14. Landwirtschaftliches Fahrzeug (10), das dafür konfiguriert ist, ein Arbeitsgerät (50) zu tragen und zu steuern, wobei das landwirtschaftliche Fahrzeug (10) ein System nach einem der Ansprüche 11 bis 14 umfasst.

15. Nichtflüchtiges, computerlesbares Speichermedium, auf dem Anweisungen gespeichert sind, die bei Ausführung durch einen oder mehrere Prozessoren das System nach einem der Ansprüche 11 bis 13 veranlassen, das Verfahren nach einem der Ansprüche 1 bis 10 auszuführen.

## Revendications

1. Procédé pour la commande d'un outil (50) d'un véhicule agricole (10) roulant sur un chemin (P) le long d'une rangée de culture (LR, RR), le procédé comprenant :
l'utilisation d'un capteur de nuage de points (20) pour balayer une partie de la rangée de culture (LR, RR) et pour générer un nuage de points ;
la définition d'une pluralité de volumes de rangées de culture (91-98), agencés le long de la partie balayée de la rangée de culture (LR, RR) ;
pour chacun des volumes de rangées de culture (91-98), la détermination d'une distribution verticale de densité de points en calculant les points du nuage de points qui se situent dans ledit volume de rangées de culture (91-98) ; et
la commande de l'outil (50) en fonction de la distribution verticale de densité de points de chacun des volumes de rangées de culture (91-98).

2. Procédé pour la commande d'un outil (50) selon la revendication 1, dans lequel chacun des volumes de rangées de culture (91-98) comprend deux ou plusieurs sous-volumes de rangées de culture (I, II, III, IV), chaque sous-volume de rangée de culture (I, II, III, IV) du volume de rangées de culture (91-98) étant agencé à une hauteur différente au-dessus du sol, et dans lequel la distribution verticale de densité de points du volume de rangées de culture (91-98) est déterminée en calculant les points du nuage de points qui se situent dans chacun des sous-volumes de rangées de culture (I, II, III, IV).

3. Procédé pour la commande d'un outil (50) selon la revendication 1 ou 2, le procédé comprenant en outre la détermination d'une enveloppe de nuage de points du nuage de points et la commande de l'outil (50) en fonction de l'enveloppe de nuage de points.

4. Procédé pour la commande d'un outil (50) selon la revendication 3, dans lequel l'enveloppe de nuage de points est déterminée en fonction de la distribution verticale de densité de points de chacun des volumes de rangées de culture (91-98).

5. Procédé pour la commande d'un outil (50) selon l'une quelconque revendication précédente, dans lequel la partie balayée de la rangée de culture (LR, RR) est au moins partiellement située en avant de l'outil (50) pendant le balayage de ladite partie, et éventuellement dans lequel l'outil (50) est placé derrière le véhicule agricole (10).

6. Procédé pour la commande d'un outil (50) selon l'une quelconque revendication précédente, comprenant en outre la détermination d'une vitesse de déplacement du véhicule agricole (10) et dans lequel la commande de l'outil (50) est en outre fonction de la vitesse de déplacement du véhicule agricole (10).

7. Procédé pour la commande d'un outil (50) selon l'une quelconque revendication précédente, dans lequel la pluralité de volumes de rangées de culture (91-98) comprend une rangée plus proche de volumes de culture (91a-98a), agencée le long de la partie balayée de la rangée de culture (LR, RR) à une première distance du chemin (P), et une autre rangée de volumes de culture (91b-98b), agencée le long de la partie balayée de la rangée de culture (LR, RR) à une seconde distance du chemin (P), la seconde distance étant supérieure à la première distance.

8. Procédé pour la commande d'un outil (50) selon l'une quelconque revendication précédente, comprenant en outre :
en fonction de la distribution verticale de densité de points des volumes de rangées de culture (91-98), la détection d'une extrémité de la rangée de culture (LR, RR) ; et
l'initiation d'une séquence de virage en fourrière comprenant la commande de l'outil (50) pour se préparer à un prochain virage en fourrière.

9. Procédé pour la commande d'un outil (50) selon l'une quelconque des revendications précédentes, dans lequel l'outil (50) est un pulvérisateur doté d'une pluralité de buses de pulvérisation, et dans lequel la commande de l'outil (50) comprend l'ouverture et la fermeture sélectives d'un sous-ensemble de la pluralité de buses de pulvérisation.

10. Procédé pour la commande d'un outil (50) selon l'une quelconque des revendications précédentes, comprenant en outre :
l'utilisation du capteur de nuage de points (20) pour balayer une partie d'une seconde rangée de culture (LR, RR) le long d'un autre côté du chemin (P),
la définition d'une pluralité de seconds volumes de rangées de culture (91-98), agencés le long de la partie balayée de la seconde rangée de culture (LR, RR) ;
pour chacun des seconds volumes de rangées de culture (91-98), la détermination d'une distribution verticale de densité de points en calculant les points du nuage de points qui se situent dans ledit volume de rangées de culture (91-98) ; et
la commande de l'outil (50) en fonction de la distribution verticale de densité de points de chacun parmi les seconds volumes de rangées de culture (91-98).

11. Système pour la commande d'un outil d'un véhicule agricole (10) roulant sur un chemin (P) le long d'une rangée de culture (LR, RR), le système comprenant un capteur de nuage de points (20) configuré pour balayer une partie de la rangée de culture (LR, RR) et pour générer un nuage de points, et un dispositif de commande (30) couplé de manière fonctionnelle au capteur de nuage de points pour recevoir le nuage de points généré à partir de celui-ci, le dispositif de commande (30) étant configuré pour
définir une pluralité de volumes de rangées de culture (91-98), agencés le long de la partie balayée de la rangée de culture (LR, RR) ;
déterminer une distribution verticale de densité de points pour chacun des volumes de rangées de culture (91-98) en calculant les points du nuage de points qui se situent dans ledit volume de rangée de culture (91-98) ; et
générer des ordres de commande pour la commande de l'outil (50) en fonction de la distribution verticale de densité de points de chacun des volumes de rangées de culture (91-98).

12. SYSTEME selon la revendication 11, dans lequel le capteur de nuage de points (20) est un capteur LIDAR.

13. Système selon la revendication 11 ou 12, comprenant en outre un capteur de vitesse permettant de déterminer une vitesse de déplacement du véhicule agricole (10), couplé de manière fonctionnelle au dispositif de commande (30), et dans lequel le dispositif de commande (30) est en outre configuré pour générer les ordres de commande en fonction de la distribution verticale de densité de points de chacun des volumes de rangées de culture (91-98) et de la vitesse de déplacement du véhicule agricole (10).

14. Véhicule agricole (10) configuré pour comporter et commander un outil (50), le véhicule agricole (10) comprenant un système selon l'une quelconque des revendications 11 à 14.

15. Support de stockage non transitoire, lisible par ordinateur, sur lequel sont stockées des instructions qui, lorsqu'elles sont exécutées par un ou plusieurs processeurs, amènent le système selon l'une quelconque des revendications 11 à 13 à exécuter le procédé selon l'une quelconque des revendications 1 à 10.
